(19) Europäisches Patentamt
European Patent Office
Office européen des brevets

(11) Publication number: **0 152 012**
**A2**

(12) # EUROPEAN PATENT APPLICATION

(21) Application number: 85100929.0

(22) Date of filing: 30.01.85

(51) Int. Cl.[4]: C 08 L 69/00
C 08 K 5/00
//A61L2/08

(30) Priority: 10.02.84 US 579103

(43) Date of publication of application:
21.08.85 Bulletin 85/34

(84) Designated Contracting States:
DE FR GB IT NL

(71) Applicant: GENERAL ELECTRIC COMPANY
1 River Road
Schenectady New York 12305(US)

(72) Inventor: Avakian, Roger W.
212 Doreen Street
Pittsfield Massachusetts 01201(US)

(74) Representative: Schüler, Horst, Dr. European Patent Attorney et al,
Kaiserstrasse 41
D-6000 Frankfurt/Main 1(DE)

(54) **Method for enhancing ionizing radiation resistance of polymer compositions.**

(57) The normal tendency of aromatic polycarbonate homopolymers and copolymers, alone or in blends with second resins, to undergo yellowing when exposed to ionizing radiation, as in certain sterilizing procedures, is diminished or eliminated by the inclusion of compounds having the effect of increasing the radiation resistance of the polymers. These compounds are, in general, characterized by a strong oxidizing action and/or reaction at high reaction rate with active species such as H radicals, OH radicals and/or hydrated electrons formed by ionizing radiation.

EP 0 152 012 A2

Croydon Printing Company Ltd.

10441-8CT-04023

0152012

# METHOD FOR ENHANCING IONIZING RADIATION RESISTANCE OF POLYMER COMPOSITIONS

## BACKGROUND OF THE INVENTION

Polymers which can be fabricated into transparent plastic articles, for example, aromatic polycarbonate resins and blends, are sometimes used in products for the medical field. These products include blood oxygenators, anesthesia canisters, intravenous connectors and accessories, pulsatile balloon pumps, and blood centrifuge bowls. Such articles are frequently sterilized, typically by heating in an autoclave, or by contact with ethylene oxide, or by exposure to ionizing radiation, e.g., gamma or electron beam radiation. Each of these techniques has certain shortcomings, however. Autoclaves are often undesirable because of the thermal instability of many polymers, including polycarbonates and polyarylates, the relatively high energy requirements of the technique, and the residual wetness of the treated article which must first be dried before use. The utilization of ethylene oxide is objectionable because of its toxicity, its instability and the environmental concerns associated with its disposal.

Sterilization by ionizing radiation is a useful alternative, being an essentially dry process that can be conducted at low temperatures and which is relatively inexpensive. The use of ionizing radiation when applied to articles made of polycarbonate resins, polyarylates, and blends in particular usually results, however, in the formation of a yellow coloration in the normally optically clear polymer. This can be regarded as unsightly, and to counteract the effect coloring agents have often been incorporated into the polymer to mask the yellow color which forms with one considered

more esthetically acceptable, for instance, a bluish tinge.

## SUMMARY OF THE INVENTION

There has now been discovered a method for increasing the ionizing radiation resistance of polycarbonate homopolymers and copolymers and/or polyarylates, alone, and in combination with second polymers that are normally prone to undergoing yellowing upon repeated or prolonged exposure to such radiation. The method involves including an additive selected from among non-polymeric compounds that stabilize the polymer against ionizing radiation and which are characterized by a strong oxidizing action and/or reaction at high reaction rate with active species such as H radicals, OH radicals and/or hydrated electrons formed by ionizing radiation. In one preferred feature, the second polymer is employed in an amount effective to render an independent color stabilizing effect.

The stabilizer compounds of this invention can have one or more functional groups selected from among carboxy (-COOH), ester (-COOR), hydroxy (-OH), thio (> S), anilido ($C_6H_5NH-$), amino ($-NH_2$), oxamido ($H_2NCOCONH-$), carbonyl ( >CO), thio-carbonyl ( >CS), and phospho. They may be selected from among esters, alcohols, hindered phenolic compounds, thioesters, oxamide phenolic compounds, oxalic anilide compounds, thiazoles, thiodiazoles, thiourea, phosphonates, phosphonites and diphosphonites.

Only small amounts of the additive are needed to impart improved ionizing radiation resistance, and typically from about 0.05 to about 2.0 parts by weight per 100 parts of the polymer.

DETAILED DESCRIPTION OF THE INVENTION

In general, the method of the invention is carried out by forming an intimate and substantially uniform admixture of the polycarbonate, or a wholly aromatic polyester (polyarylate), to be treated and, optionally, a second polymer, and to combine therewith the described additive or additives. Formation of the mixture can be accomplished in any convenient manner, using standard blending equipment and techniques, for instance, by means of a mechanical blender, paddle mixer, tumbler device, or equivalent. If desired, the polymer(s) and additive can be dissolved in a mutual solvent with thorough mixing, then recovered in the conventional manner, for instance, by distillation or evaporation of the solvent. Alternatively, the ingredients can be melt blended, as by passage through an extruder at an elevated temperature or at temperatures slightly above the softening point of the polymer or polymer blend. Any of these procedures is utilizable to add the stabilizing agent to the polymer or polymer blend.

Polycarbonate homopolymers useful in this invention are especially aromatic polycarbonates. These polymers can be made by those skilled in the art or obtained from various commercial sources. They may be prepared by reacting a dihydric phenol with a carbonate precursor, such as phosgene, a haloformate or a carbonate ester. Typically, they will have recurring structural units of the formula

$$-\!\!\left(O-A-O-\overset{\overset{\displaystyle O}{\|}}{C}\right)\!\!-$$

wherein A is a divalent aromatic radical of the dihydric phenol employed in the polymer producing reaction. Preferably, the aromatic carbonate polymers have an intrinsic viscosity ranging from 0.30 to 1.0 dl./g. (measured in methylene chloride at 25°C.). By dihydric phenols is meant mononuclear or polynuclear aromatic compounds containing two hydroxy radicals, each of which is attached to a carbon atom of an aromatic nucleus. Typical dihydric phenols include 2,2-bis-(4-hydroxyphenyl)propane; 2,2-bis-(3,5-dimethyl-4-hydroxyphenyl)propane, 4,4-dihydroxyphenyl ether, bis(2-hydroxyphenyl)methane, mixtures thereof and the like. The preferred aromatic carbonate polymer is a homopolymer derived from 2,2-bis(4-hydroxyphenyl)propane (bisphenol-A).

Poly(ester-carbonates) for use in the invention are known and can be obtained commercially. Generally, they are copolyesters comprising recurring carbonate groups:

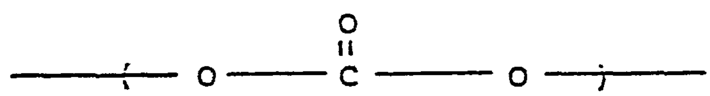

carboxylate groups:

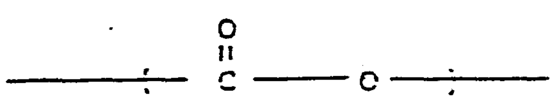 , and

aromatic carbocyclic groups in the linear polymer chain, in which at least some of the carboxylate groups and at least some of the carbonate groups are bonded directly to ring carbon atoms of the aromatic carbocyclic groups. These poly(ester-carbonate) copolymers, in general, are prepared by reacting a difunctional carboxylic acid, such as phthalic acid, isophthalic acid, terephthalic acid, homophthalic acid, o-, m-, and p-phenylenediacetic acid, the polynuclear aromatic acids, such as diphenic acid, 1,4-naphthalic acid, mixtures of any of the foregoing, and the like, with a dihydric phenol and a carbonate precursor of the types described above. A particularly useful polyester carbonate is derived from bisphenol-A, isophthalic acid, terephthalic acid, or a mixture of isophthalic acid and terephthalic acid, or the reactive derivatives of these acids such as terephthaloyl dichloride, isophthaloyl dichloride, or a mixture thereof, and phosgene. The molar proportions of dihydroxy diaryl units to benzenedicarboxylate units to carbonate units can range from 1:0.2-1.0:0.80-0.00 and the molar range of terephthalate units to isophthalate units can range from 99:1 to 1:99 in this preferred family of resins. When the molar proportion of carbonate units is 0, the resin is a wholly aromatic polyester. See, Robeson, U.S. 4,324,869.

Poly(sulfone-carbonates) useful in the practice of this invention are those derived from the reaction of a sulfone, for example, a dihydroxydiphenyl sulfone, a dihydric phenol and phosgene or a phosgene precursor. A preferred material is made by polymerizing bis-(3,5-dimethyl-4-hydroxy phenyl) sulfone and bisphenol-A with phosgene in accordance with the description in Fox, U.S. 3,737,409. An especially favored copolymer of this type is made by reacting 1 to 99, preferably 40 to 99 weight percent of the sulfone and 99 to 1, preferably 60 to 1 weight percent of the bisphenol-A with phosgene.

The term "phthalates" is used herein in its conventional sense to designate salts of phthalic acid containing the radical $C_6H_4(COO)_2=$, and preferably diesters of this class having from 9 to 60 carbon atoms, including but not limited to diamyl phthalate, dibutyl phthalate and diethyl phthalate, dibenzyl phthalate, dimethyl phthalate, phenyl cresyl phthalate, phenyl benzyl phthalate, butyl benzyl phthalate, butyl cyclohexyl phthalate, octyl cresyl phthalate, diphenyl phthalate,

di-n-hexyl phthalate, diisohexyl phthalate, butyl octyl phthalate, butyl decyl phthalate, diisooctyl phthalate, di-2-ethylhexyl phthalate, di-n-octyl phthalate, diisononyl phthalate, diisodecyl phthalate, di-2-propyl heptyl phthalate, di-n-nonyl phthalate, di-n-decyl phthalate and ditridecyl phthalate, as well as mixtures of any of the foregoing.

Also contemplated for use in this invention are isophthalates and terephthalates corresponding to the above, that is to say, the corresponding diesters based on isophthalic acid and terephthalic acid, for example, dimethyl isophthalate, diamyl isophthalate, dibutyl isophthalate and so forth, and likewise, dimethyl terephthalate, diamyl terephthalate, dibutyl terephthalate, and so forth.

Alcohols suitable for addition to the polymer can be selected from a wide spectrum of compounds. Usually, the alcohol will contain from 2 to 50 carbon atoms, straight or branched chain. Diols and polyols are preferred, with special mention being made of diols as the most preferred. By way of illustration, such diols include aliphatic, for example, ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexanediol, and the like; alicyclic, for example, 1,2-cyclopentanediol, 1,2-cyclohexanediol, and the like; branched acyclic, for example, 2,3-dimethyl-2,3-butanediol (pinacol), and the like.

The thioesters or thiodiesters used in the practice of the present process are those of the formula:

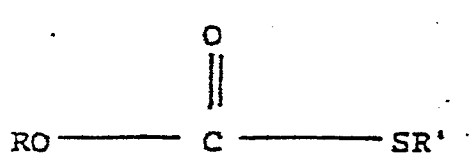 or 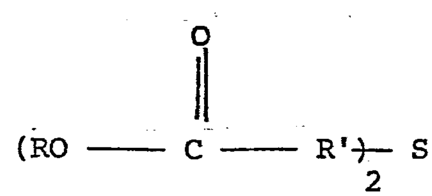

in which R and R' are, independently, alkyl, straight or branched, of from 1 to 15 carbon atoms, for example, methyl, ethyl, n-butyl, n-propyl, n-pentyl, isobutyl, isopropyl, hexyl, etc.

The thiodiazoles will be pentacyclic hydrocarbons containing 2 nitrogen atoms and 1 sulfur atom in the ring structure. These can and preferably do additionally comprise one or more thiol groups (-SH) substituted on the ring.

The thiazoles will be those compounds which are derived from either of the following:

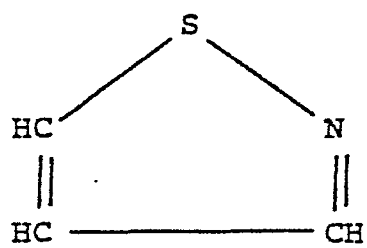

ortho

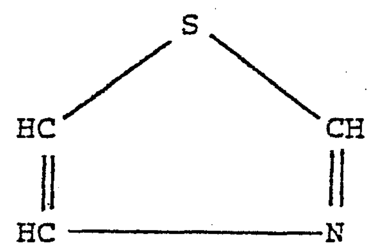

meta

Also encompassed are other types of thio-containing compounds, such as thiourea.

Also useful with this method are highly branched polyols, for example, pentaerythritol, as well as alkoxy-substituted cyclic or acyclic alkanes, for example, trimethylol propane or 1,4-cyclohexane dimethanol.

Additional compounds which function as stabilizers in the present process are high molecular weight oxamide phenolics, for example, 2,2-oxamido bis-[ethyl 3-(3,5-di-tert-butyl-4-hydroxyphenyl) propionate], and high molecular weight oxalic anilides and their derivatives.

Also contemplated are phosphonites, especially diphosphonites of the formula:

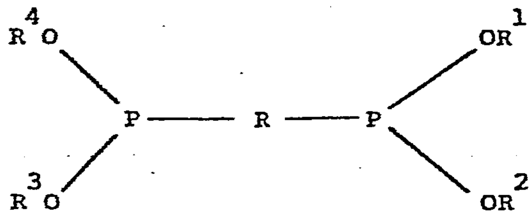

where R is aryl, e.g., phenyl or diphenyl, and $R^1$, $R^2$, $R^3$ and $R^4$ are, independently, phenyl groups which are substituted or unsubstituted with alkyl, straight or branched, having from 1 to 12 carbon atoms.

The phosphonates which are useful in this invention are those of the formula

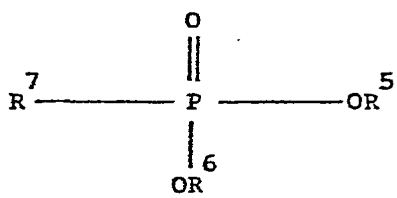

where $R^5$, $R^6$ and $R^7$ are, independently, alkyl or aryl of from 1 to 30 carbon atoms, as well as nickel-containing derivatives thereof.

Contemplated, too, are inorganic acid salts, and especially alkali metal salts of, for instance, sulfurous acid, e.g., sodium sulfite.

For those embodiments of the invention containing a second resin, the amount used with respect to the polycarbonate or polyarylate can vary widely. Generally, it will be in the range of 1 to 99 parts by weight to correspondingly 99 to 1 parts by weight, based on 100 parts by weight of first and second polymer, combined.

Polyesters suitable for use herein are derived from an aliphatic, aliphatic ether or cycloaliphatic diol, or mixtures thereof, preferably containing from

about 2 to about 10 carbon atoms, and one or more aromatic or cycloaliphatic dicarboxylic acids. Preferred polyesters are derived from an aliphatic diol and an aromatic dicarboxylic acid having repeating units of the following general formula:

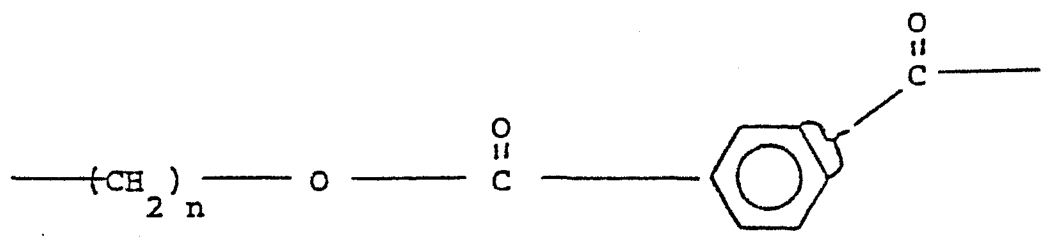

wherein n is an integer of from 2 to 4. The most preferred polyester is poly(ethylene terephthalate).

Also contemplated herein are the above polyesters with additional amounts of polyols and/or acids in the amounts of from 0.5 to 50 wt.-percent based on the total composition. The acids can be aliphatic or cycloaliphatic with the number of carbon atoms ranging from 2 to 20. Likewise, the glycols can be cycloaliphatic or aliphatic with the number of carbon atoms covering the same range. Polyalkylene ether glycols can also be used where the alkylene portion has from 2 to 10 carbon atoms and the entire glycol portion varies in molecular weight from 100 to 10,000. All such polyesters can be made following the teachings of, for example, U.S. Patent Nos. 2,465,319 and 3,047,539.

The polyesters which are derived from a cycloaliphatic diol and an aromatic dicarboxylic acid are prepared, for example, by condensing either the cis- or trans-isomer (or mixtures thereof) of, for example, 1,4-cyclohexanedimethanol with an aromatic dicarboxylic acid so as to produce a polyester having recurring units of the following formula:

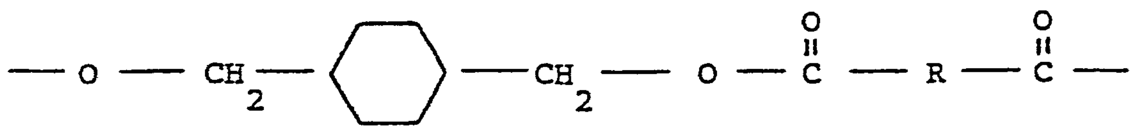

wherein the cyclohexane ring is selected from the cis- and trans-isomers thereof and R represents an aryl or cycloaliphatic radical containing 6 to 20 carbon atoms and which is the decarboxylated residue derived from an aromatic dicarboxylic acid.

Examples of aromatic dicarboxylic acids represented by the decarboxylated residue R are isophthalic or terephthalic acid, 1,2-di(p-carboxyphenyl)ethane, 4,4'-dicarboxydiphenyl ether, etc., and mixtures of these. Acids containing fused rings can also be present, such as in 1,4- or 1,5-naphthalenedicarboxylic acids. Also contemplated are cycloaliphatic diacids, such as cyclohexane dicarboxylic acid. The preferred dicarboxylic acids are terephthalic acid or a mixture of terephthalic and isophthalic acids.

Another preferred polyester may be derived from the reaction of either the cis- or trans-isomer (or a mixture thereof) of 1,4-cyclohexanedimethanol with a mixture of isophthalic and terephthalic acids. Such a polyester would have repeating units of the formula:

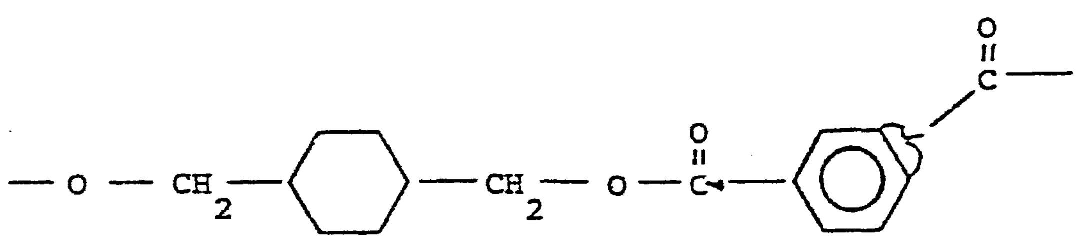

Still another preferred polyester is a copolyester derived from a cyclohexane dimethanol, an alkylene glycol and an aromatic dicarboxylic acid. These copolyesters are prepared by condensing either the cis- or trans-isomer (or mixtures thereof) of, for example, 1,4-cyclohexane-dimethanol and an alkylene glycol with an

aromatic dicarboxylic acid so as to produce a copolyester having units of the following formula:

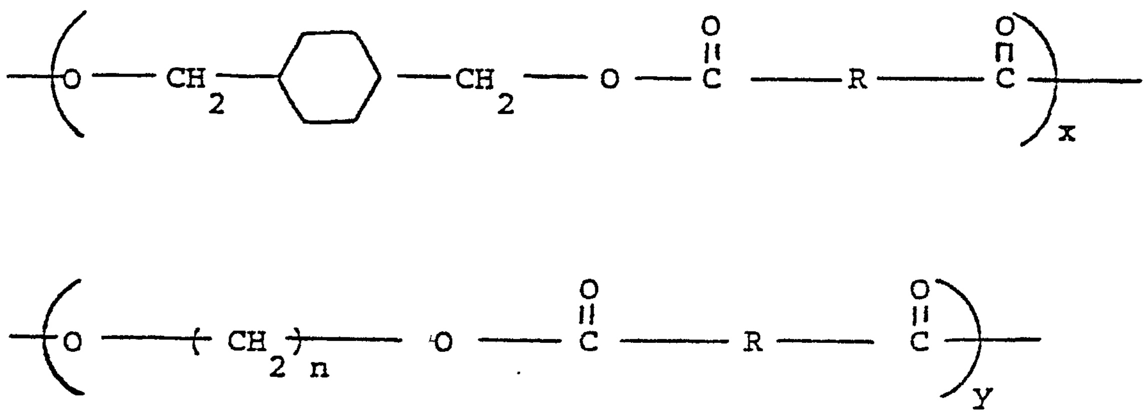

wherein the cyclohexane ring is selected from the cis- and trans-isomers thereof, R is as previously defined, n is an integer of 2 to 10, the x units comprise from about 1 to about 99 percent by weight, and the y units comprise from about 99 to about 1 percent by weight.

Such a preferred copolyester may be derived from the reaction of either the cis- or trans-isomer (or mixtures thereof) of 1,4-cyclohexanedimethanol and ethylene glycol with terephthalic acid in a molar ratio of 80:20 :100. These copolyesters have repeating units of the following formula:

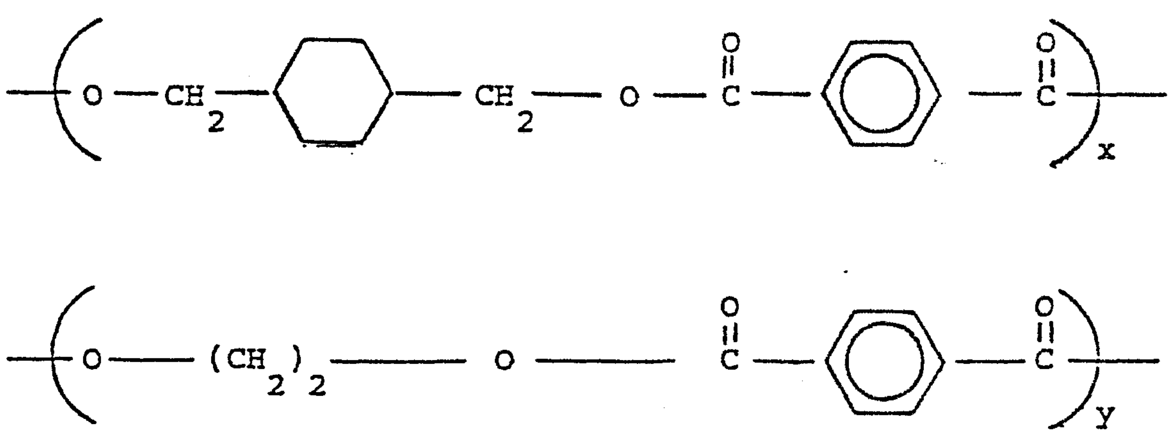

wherein x and y are as previously defined.

The polyesters described herein are either

commercially available or they can be produced by methods known in the art, including those set forth in U.S. Patent No. 2,901,466.

The polyesters employed in the practice of this invention will usually have an intrinsic viscosity of from about 0.4 to about 2.0 dl./g., as measured in a 60:40 phenol:tetrachloroethane mixture, or similar solvent at 23°-30°C.

In formulating the polymer-additive blends, it should be understood that other ingredients may be and often are included. Such additional ingredients are generally selected from among conventional non-polymeric materials often utilized with polycarbonate resins and blends to affect the chemical and physical properties. These materials include plasticizers, thermal stabilizers, antioxidants, flame retardant agents, lubricants, fillers and reinforcing agents. Conventional amounts are employed.

The compositions made in accordance with this invention can be processed into molded articles that are useful as components in sterilizable medical products, such as those mentioned above. They may be subjected to stringent sterilizing conditions with much less loss of optical clarity.

DESCRIPTION OF THE SPECIFIC EMBODIMENTS

Further illustration of the process of this invention is set forth in the following examples. There is no intention to limit the scope of the invention to merely what is shown, however.

In the Examples, the molded test samples were irradiated in air using a cobalt-60 radiation source. Measurement of the yellowness index was made on a Pacific-Scientific Spectrogard II unit in accordance with ASTM D 1925, using 1/8-inch thick injection molded plaques.

Readings were taken as soon as received from irradiation.

EXAMPLES 1-14

Compositions were made in accordance with the invention by mixing the compounds listed in Table 1, in the amounts shown, with poly(bisphenol-A carbonate) resin (LEXAN®, General Electric Co.).

The mixtures were extruded at temperatures of from 520 to 570°F. and injection molded into test placques at 520 to 550°F. (120 to 180°F. mold temperature). The results obtained are set forth in TABLE 1:

TABLE 1

| Ex. | Additive | Amt, phr | Initial YI | Dose | After γ-Irradiation YI | ΔYI | $\frac{\Delta YI}{Dose}$ = Slope |
|---|---|---|---|---|---|---|---|
| Control | None | -- | 2.77 | 5.0 | 35.18 | 32.41 | 6.48 |
| 1 | Tri-functional hindered phenol[a] | 0.2 | 4.6 | 5.3 | 21.7 | 17.1 | 3.22 |
| 2 | Dilaurylthio-dipropionate[b] | 0.2 | 3.7 | 5.3 | 22.0 | 18.3 | 3.45 |
| 3 | 1,4-Cyclohexane dimethanol | 0.2 | 3.2 | 5.3 | 22.9 | 19.7 | 3.72 |
| 4 | 2,5-Dimercapto-1,3,4-thiadiazole[c] | 0.2 | 28.56 | 5.0 | 35.87 | 7.31 | 1.46 |
| 5 | 2,5-Dimercapto-1,3,4-thiadiazole[c] | 0.05 | 10.05 | 5.0 | 21.90 | 11.85 | 2.37 |
| 6 | Thiourea | 0.05 | 16.05 | 5.0 | 33.73 | 17.68 | 3.53 |
| 7 | Sodium Sulfite | 0.5 | 5.28 | 5.3 | 22.57 | 13.48 | 4.25 |
| 8 | 2-Mercapto benzothiazole | 0.1 | 15.8 | 5.2 | 30.1 | 14.3 | 2.75 |
| 9 | Nickel bis(o-ethyl (3,5 di-tert-butyl-4-hydroxybenzyl)) phosphonate[d] | 0.2 | 16.8 | 5.2 | 39.7 | 22.9 | 4.40 |

TABLE 1 (CONTINUED)

| | | | | | | | |
|---|---|---|---|---|---|---|---|
| 10 | 2,2'-Oxamido bis-(ethyl 3-(3,5-di-tert-butyl-4-hydroxyphenyl) priopionate)[e] | 0.2 | 3.14 | 5.0 | 23.01 | 19.87 | 3.97 |
| 11 | Oxalic anilide derivative[f] | 0.2 | 2.36 | 5.0 | 18.14 | 15.78 | 3.16 |
| 12 | Pentaerythritol | 0.2 | 3.08 | 5.0 | 26.21 | 23.13 | 4.63 |
| 13 | Trimethylol propane | 0.2 | 1.96 | 5.0 | 23.95 | 21.99 | 4.39 |
| 14 | Tetrakis (2,4-di-tert-butylphenyl) 4,4'-biphenylenedi-phosphonite[g] | 0.1 | 2.45 | 2.5 | 16.05 | 13.60 | 5.44 |
| | Tetrakis (methylene (3,5-di-tert-butyl-4-hydroxy-hydrocinnamate)methane[h] | 0.1 | | | | | |

In the foregoing table, the term "YI" refers to the yellowness index, the Dose is stated in units of Mrad total, and the amount of additive is in parts by weight per 100 parts of polycarbonate resin. The letter designations refer to the following commercial materials

a = GOOD-RITE® 3125, B.F. Goodrich Co., 3,5-di-tert-butyl-4-hydroxyhydrocinnamic acid triester with 1,3,5-tris(2-hydroxyethyl)-s- triazine-2,4,6(1H,3H,5H)-trione
b = CYANOX® LTDP, American Cyanamid Co.
c = VANCHEM® DMTD, R.T. Vanderbilt Co., Inc.
d = IRGASTAB® 2002, Ciba-Geigy Corp.
e = NAUGARD® XL-1, Uniroyal Corp., an oxamide phenolic
f = SANDUVOR® VSU, Sandoz Co.
g = SANDOSTAB P-EPQ, Sandoz Co.
h = IRGANOX® 1010, Ciba-Geigy Corp., a high molecular weight sterically hindered phenolic compound.

EXAMPLE 15

A polymer blend was prepared by forming an admixture, extruding at a temperature of from 500 to 600°F. and injection molding into test pieces at a temperature of from 500 to 580°F. In addition to gamma radiation, some specimens are exposed to a source of electron beam radiation, which yellows unmodified polycarbonate significantly. The formulations employed and the results obtained are set forth in TABLE 2:

TABLE 2

| EXAMPLE | 15A* | 15 |
|---|---|---|
| Composition (parts by weight) | | |
| Poly(bisphenol A carbonate)[a] | 50 | 50 |
| Copolyester: 85 mole% terephthalate, 15 mole % isophthalate and 1,4-cyclohexane dimethanol[b] | 50 | 50 |
| Trifunctional hindered phenol[c] | -- | 0.2 |
| Mixed red and blue dyes | 0.00102 | 0.00102 |
| Properties | | |
| Gamma irradiated, dosage | Yellowness Index, YI | |
| 5 megarads | 7.48 | 4.13 |

* Control

a LEXAN®, General Electric Co.

b KODAR®, Eastman Kodak Co.

c GOOD-RITE® 3125, B.F. Goodrich Co.

The composition of Example 15 was more effectively color stabilized against gamma radiation than was the control, which, itself, was also color stabilized.

Other modifications and variations are possible in the light of the above disclosure. For example if, instead of ionizing radiation of the gamma radiation type, ionizing radiation of the electron beam type is used, compositions according to this invention will show marked resistance to yellowing in comparison with the control. Moreover, if a polyarylate polymer comprising units derived from bisphenol A and terephthalic acid is substituted for the poly(bisphenol A carbonate) in the composition of Example 15, a composition color stabilized against both gamma radiation and electron beam radiation will be obtained. It is to be understood, therefore, that changes may be made in the particular embodiments shown which are within the scope of the invention defined in the appended claims.

CLAIMS:

1. A method for imparting enhanced stability against ionizing radiation to an aromatic polycarbonate homopolymer or copolymer, alone, or in admixture with a second polymer, comprising including an effective amount of at least one non-polymeric stabilizer compound which decreases the tendency of the polymer to undergo yellowing upon exposure to said radiation, said non-polymeric stabilizer compound being characterized by a strong oxidizing action and/or reaction at high reaction rate with active species such as H radicals, OH radicals and/or hydrated electrons formed by ionizing radiation.

2. A method according to Claim 1 wherein said second polymer is present in an amount sufficient to decrease the tendency of the polymer admixture to yellow.

3. A method according to Claim 1, in which the stabilizer compound has one or more functional groups selected from among carboxy (-COOH), ester (-COOR), hydroxy (-OH), thio ( >S), anilido ($C_6H_5NH-$), amino ($-NH_2$), oxamido ($H_2NCOCONH-$), carbonyl ( >CO), thiocarbonyl ( >CS), and phospho.

4. A method according to Claim 3, in which the stabilizer compound is selected from among alcohols, esters, hindered phenolic compounds, thioesters, oxamide phenolic compounds, oxalic anilide compounds, thiazoles, thiodiazoles, thiourea, phosphonates, phophonites and diphosphonites.

5. A method according to Claim 1, in which the stabilizer compound is included in an amount from about 0.05 to about 2.0 percent by weight, per 100 parts of the polycarbonate alone or in admixture with the second polymer.

6. A method according to Claim 1, in which the polycarbonate is a homopolymer prepared by reacting a dihydric phenol with a carbonate precursor and has recurring structural units of the formula

$$-\!\!\left(-O-A-O-\overset{\overset{\displaystyle O}{\|}}{C}-\right)\!\!-$$

wherein A is a divalent aromatic radical of the dihydric phenol.

7. A method according to Claim 6, in which the polycarbonate is poly(bisphenol A carbonate) resin.

8. A method according to Claim 1, in which the polycarbonate is a poly(ester-carbonate) comprising recurring carbonate groups:

$$-\!\!\left(-O-\overset{\overset{\displaystyle O}{\|}}{C}-O-\right)\!\!-\ ,$$

recurring carboxylate groups:

$$-\!\!\left(-\overset{\overset{\displaystyle O}{\|}}{C}-O-\right)\!\!-\ ,\quad \text{and}$$

aromatic carbocyclic groups in the linear polymer chain, in which at least some of the carboxylate groups and at least some of the carbonate groups are bonded directly to ring carbon atoms of the aromatic carbocyclic groups.

9. A method according to Claim 8, in which the poly(ester-carbonate) is derived from bisphenol-A and either isophthalic acid or terephthalic acid.

10. A method according to Claim 8, in which the poly(ester-carbonate) is derived from a mixture of isophthalic acid, terephthalic acid and bisphenol-A.

11. A method according to Claim 4, in which the stabilizer compound is a phthalate selected from among diamyl phthalate, dibutyl phthalate, diethyl phthalate, dibenzyl phthalate, dimethyl phthalate, phenyl cresyl phthalate, phenyl benzyl phthalate, butyl benzyl phthalate, butyl cyclohexyl phthalate, octyl cresyl phthalate, diphenyl phthalate, di-n-hexyl phthalate, diisohexyl phthalate, butyl octyl phthalate, butyl decyl phthalate, diisooctyl phthalate, di-2-ethylhexyl phthalate, di-n-octyl phthalate, diisononyl phthalate, diisodecyl phthalate, di-2-propyl heptyl phthalate, di-n-nonyl phthalate, di-n-decyl phthalate and ditridecyl phthalate, as well as mixtures of any of the foregoing.

12. A method according to Claim 11, in which the stabilizer compound is an isophthalate or terephthalate corresponding to any of those listed.

13. A method according to Claim 4, in which the stabilizer compound is an alcohol.

14. A method according to Claim 13, in which the alcohol is a diol.

15. A method according to Claim 14, in which the diol is 1,4-cyclohexane dimethanol.

16. A method according to Claim 13, in which the alcohol is a polyol.

17. A method according to Claim 16, in which the polyol is pentaerythritol.

18. A method according to Claim 16, in which the polyol is trimethylolpropane.

19. A method according to Claim 16, in which the polyol is sterically hindered.

20. A method according to Claim 19, in which the sterically hindered phenol is 3,5-di-tert-butyl-4-hydroxyhydrocinnamic acid triester with 1,3,5-tris (2-hydroxyethyl)-s- triazine-2,4,6(1H,3H,5H)-trione.

21. A method according to Claim 19, in which the sterically hindered phenol is tetrakis (methylene (3,5-di-tert-butyl-4-hydroxy-hydrocinnamate)) methane.

22. A method according to Claim 4, in which the stabilizer compound is an oxamide phenolic.

23. A method according to Claim 22, in which the oxamide phenolic compound is 2,2'-oxamido-bis-(ethyl 3-(3,5-di-tert-butyl-4-hydroxyphenyl)propionate).

24. A method according to Claim 4, in which the stabilizer compound is a thiadiazole.

25. A method according to Claim 24, in which the thiadiazole is 2,5-dimercapto-1,3,4-thiadiazole.

26. A method according to Claim 4, in which the stabilizer compound is an oxalic anilide derivative.

27. A method according to Claim 4, in which the stabilizer compound is a thioester.

28. A method according to Claim 27, in which the thioester is dilaurylthiodipropionate.

29. A method according to Claim 4, in which the stabilizer compound is a thiazole derivative.

30. A method according to Claim 29, in which the thiazole derivative is 2-mercaptobenzothiazole.

31. A method according to Claim 4, in which the stabilizer is an organic phosphorus compound.

32. A method acccording to Claim 31, in which the organic phosphorus compound is a phosphonate.

33. A method according to Claim 32, in which the phosphonate is nickel bis(O-ethyl (3,5-di-tert-butyl-4-hydroxybenzyl))phosphonate.

34. A method according to Claim 31, in which the organic phosphorus compound is a diphosphonite.

35. A method according to Claim 34, in which the diphosphonite is tetrakis (2,4-di-tert-butylphenyl) 4,4'-biphenylenediphosphonite.

36. A method according to Claim 1, in which the stabilizer compound is an inorganic acid salt.

37. A method according to Claim 36, in which the acid is sulfurous.

38. A method according to Claim 37, in which the salt is an alkali metal salt of sulfurous acid.

39. A method according to Claim 38, in which the salt is sodium sulfite.

40. A method according to Claim 1, in which the second polymer is a polyester homopolymer or copolymer.

41. A method according to Claim 40, in which the second polymer is a poly(alkylene aromatic dicarboxylate).

42. A method according to Claim 41, in which the poly(alkylene aromatic dicarboxylate) is derived from an aliphatic diol and an aromatic dicarboxylic acid and has repeating units of the formula:

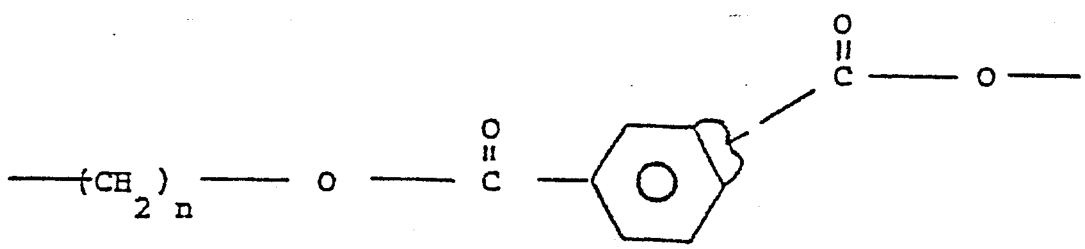

wherein n is an integer of from 2 to 4.

43. A method according to Claim 42, in which the poly(alkylene aromatic dicarboxylate) is poly (ethylene terephthalate).

44. A method according to Claim 41, in which the poly(alkylene aromatic dicarboxylate) is derived from a cycloaliphatic diol and an aromatic dicarboxylic acid and has recurring units of the formula:

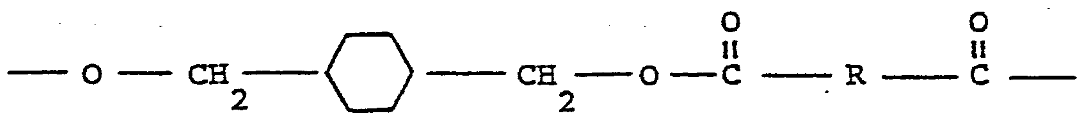

wherein the cyclohexane ring is selected from cis- and trans-isomers thereof and R represents an aryl or cycloaliphatic radical containing from 6 to 20 carbon atoms and which is the dicarboxylated residue derived from an aromatic dicarboxylic acid.

45. A method according to Claim 44, in which the poly(alkylene aromatic dicarboxylate) is derived from the reaction of 1,4-cyclohexanedimethanol with a mixture of isophthalic and terephthalic acids, having repeating units of the formula:

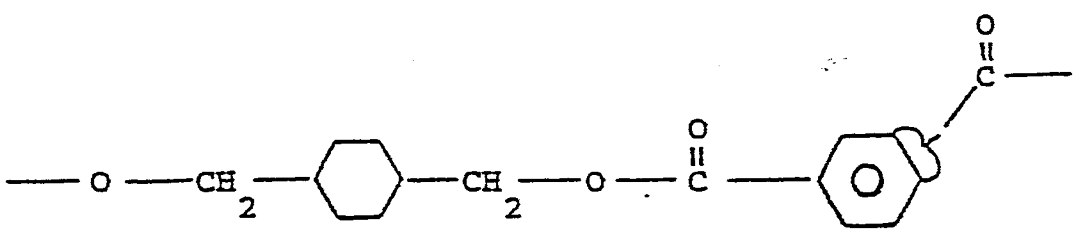

46. A method according to Claim 41, in which the polyester copolymer is derived from cyclohexanedimethanol, an alkylene glycol and an aromatic dicarboxylic acid having units of the formula

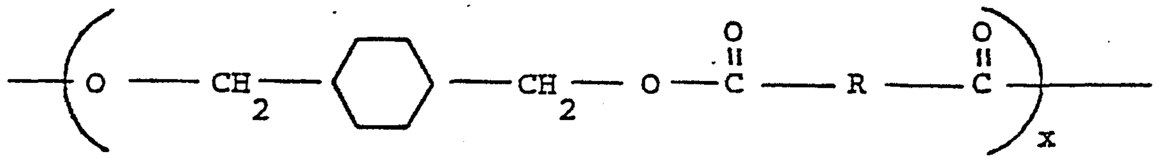

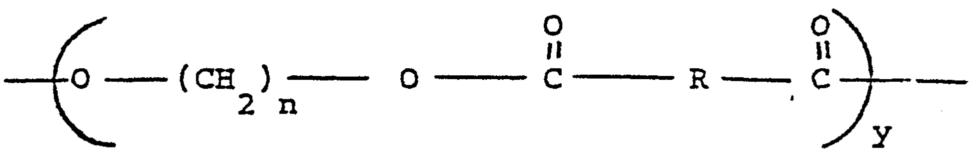

in which the cyclohexane ring is selected from the cis- and trans-isomers thereof, R is the dicarboxylated residue of isophthalic or terephthalic acid, n is an integer of from 2 to 10, the x units comprise from about 1 to about 99 percent by weight, and the y units comprise from about 99 to about 1 percent by weight.

47. A method according to Claim 46, in which the copolyester is derived from the reaction of 1,4-cyclohexanedimethanol and ethylene glycol with terephthalic acid.

48. A method according to Claim 1, in which the first polymer is poly(bisphenol A carbonate) homopolymer and the second polymer is poly(ethylene terephthalate).

49. A method according to Claim 1, in which the first polymer is poly(bisphenol A carbonate) homopolymer and the second polymer is a copolyester of 1,4-cyclohexanedimethanol, ethylene glycol and terephthalic acid.

50. A method according to Claim 1, in which the first polymer is poly(bisphenol A carbonate) homopolymer and the second polymer is a hydroxy terminated polyester of ethylene glycol, phthalic acid and a branching agent.

51. A method according to Claim 1, in which the first polymer is poly(bisphenol A carbonate) homopolymer and the second polymer is a polyester of ethylene glycol, butylene glycol and adipic acid.

52. A method according to Claim 1, in which the first polymer is poly(bisphenol A carbonate) homopolymer and the second is a copolyester of terephthalate, isophthalate and 1,4-cyclohexanedimethanol.

53. A method according to Claim 1, in which the first polymer is poly(bisphenol A carbonate) homopolymer and the second polymer is a polyester of 1,4-cyclohexanedimethanol and 1,4-cyclohexane dicarboxylic acid.

54. A method according to Claim 1, in which the first polymer is poly(bisphenol A carbonate) homopolymer and the second polymer is a copolyester comprising units derived from poly(tetramethylene)glycol, 1,4-butanediol, neopentyl glycol and terephthalic acid.

55. A method according to Claim 2, in which the two polymers range in amount between 99:1 and 1:99 parts by weight, based on 100 parts by weight of the two combined.